# Europäisches Patentamt

# European Patent Office

# Office européen des brevets

(11) Veröffentlichungsnummer: **0 195 344**
**B1**

(12) # EUROPÄISCHE PATENTSCHRIFT

(45) Veröffentlichungstag der Patentschrift:
21.09.88

(21) Anmeldenummer: **86103176.3**

(22) Anmeldetag: **10.03.86**

(51) Int. Cl.⁴: **B 60 H 1/24,** B 60 H 1/34,
F 24 F 13/075

(54) Belüftungsvorrichtung aus Kunststoff in Kraftfahrzeugen.

(30) Priorität: **21.03.85 DE 3510279**

(43) Veröffentlichungstag der Anmeldung:
**24.09.86 Patentblatt 86/39**

(45) Bekanntmachung des Hinweises auf die Patenterteilung:
**21.09.88 Patentblatt 88/38**

(84) Benannte Vertragsstaaten:
**AT BE DE FR GB IT NL SE**

(56) Entgegenhaltungen:
**WO-A-84/04498**
**DE-A-3 202 355**
**FR-A-1 178 863**
**GB-A-717 257**
**GB-A-1 396 993**
**GB-A-1 549 177**

(73) Patentinhaber: **Siemens Aktiengesellschaft Berlin und München, Wittelsbacherplatz 2, D-8000 München 2 (DE)**

(72) Erfinder: **Hildebrand, Reinhard, Hauptstrasse 11, D-8627 Redwitz (DE)**
Erfinder: **Kusuma, Djuanarto- Adi, Am Sportplatz 20, D-8635 Dörfles- Esbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft eine Belüftungsvorrichtung aus Kunststoff in Kraftfahrzeugen, enthaltend ein Gehäuse und mindestens ein gegenüber dem Gehäuse drehbar gelagertes Lüftungsgitter. Derartig z. B. aus der GB-A-1 396 993 bekannte Vorrichtungen befinden sich vorwiegend am Armaturenbrett von Kraftfahrzeugen.

Andere bekannte, aus Kunststoff bestehende Belüftungsvorrichtungen in Kraftfahrzeugen, bestehen aus einem Gehäuse und aus einem Lüftungsgitter, an dem mehrere Lamellen eingerastet sind, um die Luftströmungsrichtung zu verändern. Die einzelnen Lamellen werden mit einer Verbindungsstange miteinander verbunden. Das Lüftungsgitter ist an das Gehäuse in einer Richtung drehbar gelagert. Die Kosten für Montage- und Werkzeug sind hoch. Bei Schwenken des Gitters bleibt dieses nicht immer innerhalb des Gehäuses.

Der Erfindung liegt die Aufgabe zugrunde, die Anzahl der Einzelteile der Belüftungsvorrichtung zu reduzieren, ohne die Funktion der Anlage zu vermindern. Gleichzeitig sollen die Kosten für Fertigung und Montage gesenkt werden. Außerdem soll insbesondere im Hinblick auf die zunehmenden Sicherheitsanforderungen im Fahrzeugbau das Lüftungsgitter im geschwenkten Zustand nicht aus dem Gehäuse herausragen.

Die Aufgabe wird bei einer Vorrichtung der eingangs genannten Art erfindungsgemäß mit einem im Gehäuse drehbar gelagerten Kreuzhebel gelöst, an dem das Lüftungsgitter eingerastet ist. Es kann noch eine Blende mit feststehenden Rippen vorhanden sein, die in die Armaturentafel integriert ist, in der das Gehäuse mit Lüftungsgitter angeordnet ist.

Durch die Kreuzlagerung ist das Lüftungsgitter in zwei Richtungen verstellbar und damit durch die Luftströmungsrichtung beeinflußbar. Eine solche Ausführungsform ist in der Montage und der Fertigung besonders vorteilhaft. Die bislang üblichen Lamellen und die dazugehörige Verbindungsstange entfallen.

Gemäß einer bevorzugten Ausführunsform der Erfindung ist das Gehäuse mit dem Lüftungsgitter in eine, mit schrägen Schenkeln versehene Blende mit feststehenden Rippen eingebaut, die in die Armaturentafel integriert ist. Durch die schräggestellten Schenkel an der Blende wird vor allem der Luftöffnungsquerschnitt des Gittergehäuses vergrößert.

Geeignete Kunststoffe sind Thermoplaste, insbesondere Acrylnitril-Butadien-Styrol-Polycarbonat-Blend, Polyphenylenoxide (PPO).

Die Erfindung wird anhand der Zeichnung näher erläutert.

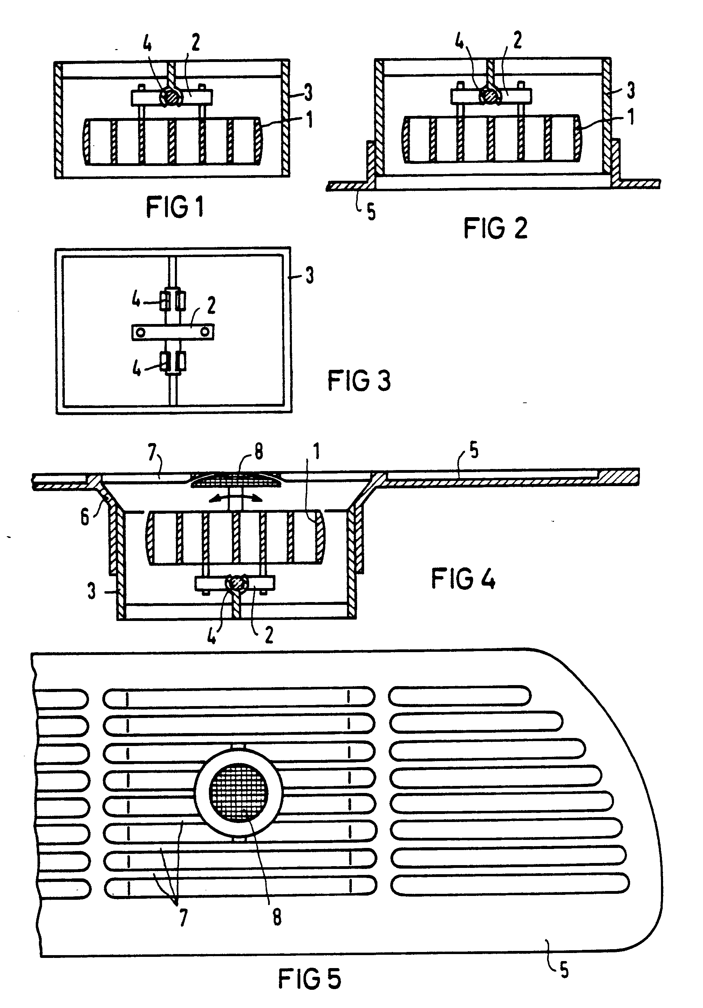

Bei dem in FIG 1 gezeigten Schnitt für ein Ausführungsbeispiel der Erfindung ist mit 2 der Kreuzhebel mit der Lagerung 4 bezeichnet. Der Kreuzhebel ist am Gehäuse 3 drehbar gelagert. Das drehbar gelagerte Lüftungsgitter 1 ist am Kreuzhebel 2 eingerastet.

FIG 2 zeigt einen Schnitt einer Ausführung nach FIG 1. Das Gehäuse 3 ist mit einer Blende 5 versehen.

FIG 3 zeigt eine Draufsicht einer erfindungsgemäßen Ausführung ohne Lüftungsgitter.

Gemäß einer Ausführung nach FIG 4 sind die Schenkel 6 in der Blende 5, die in die Armaturentafel integriert ist, schräg. Mit 8 ist ein Betätigungsknopf bezeichnet, der in die Rippen 7 eingelassen ist.

FIG 5 zeigt die Vorderansicht der Blende 5 mit feststehenden Rippen 7. 8 ist wiederum der Betätigungsknopf.

## Patentansprüche

1. Belüftungsvorrichtung aus Kunststoff in Kraftfahrzeugen enthalten ein Gehäuse (3) und mindestens ein gegenüber dem Gehäuse drehbar gelagertes Lüftungsgitter (1), gekennzeichnet durch einen im Gehäuse (3) drehbar gelagerten Kreuzhebel (2), an dem das Lüftungsgitter (1) eingerastet ist.

2. Belüftungsvorrichtung nach Anspruch 1, gekennzeichnet durch eine Blende (5), die feststehende Rippen (7) aufweist und in die Armaturentafel integriert ist.

3. Belüftungsvorrichtung nach Anspruch 2, dadurch gekennzeichnet, daß die Blende (5) schräge Schenkel (6) aufweist.

## Claims

1. A ventilating device of plastics material for motor vehicles, comprising a housing (3) and at least one ventilating grille (1) rotatably mounted relative to the housing, characterised by a cross-lever (2) rotatably mounted in the housing (3), on which the ventilating grille (1) is locked.

2. A ventilating device according to claim 1, characterised by a shutter (5) that has fixed ribs (7) and is integral with the instrument panel.

3. A ventilating device according to claim 2, characterised in that the shutter (5) has inclined side pieces (6).

## Revendications

1. Dispositif d'aération en matière plastique de véhicules automobiles, comprenant un corps (3) et au moins une grille d'aération (1) montée tournante par rapport au corps, caractérisé par un levier en croix (2) monté tournant dans le corps (3) et sur lequel est encliquetée la grille d'aération (1).

2. Dispositif d'aération suivant la revendication 1, caractérisé par un écran (5) qui comporte des

**0 195 344**

nervures (7) fixes et qui est intégré au tableau de bord.

3. Dispositif d'aération suivant la revendication 2, caractérisé en ce que l'écran (5) comporte des branches (6) inclinées.

FIG 1

FIG 2

FIG 3

FIG 4

FIG 5